# EUROPEAN PATENT SPECIFICATION

(11) **EP 2 885 503 B1**
(45) Date of publication and mention of the grant of the patent: **28.10.2020**
(21) Application number: 13852977.1
(22) Date of filing: 06.08.2013
(51) Int. Cl.: F01D 5/34, F01D 11/00

(54) **INTEGRALLY BLADED ROTOR**
INTEGRAL BESCHAUFELTER ROTOR
ROTOR AUBAGÉ INTÉGRALEMENT

(30) Priority: 14.08.2012 US 201213585068
(43) Date of publication of application: 24.06.2015
(73) Proprietor: United Technologies Corporation, Farmington, CT 06032 (US)
(72) Inventor: SUCIU, Gabriel L., Glastonbury, CT 06033 (US); NORRIS, James W., Lebanon, CT 06249 (US)
(74) Representative: Dehns
(86) International application number: PCT/US2013/053752
(87) International publication number: WO 2014/074185

(56) References cited:
- US-A- 4 813 848
- US-A- 5 292 385
- US-A1- 2008 304 972
- US-A1- 2010 239 422
- US-A1- 2011 182 745

## Description

### BACKGROUND OF THE INVENTION

This application relates to an integrally bladed rotor, such as utilized in gas turbine engines, wherein an outer rim has a discontinuity.

Gas turbine engines typically include a plurality of sections mounted in series. A fan section may deliver air to a compressor section. The compressor section may include high and low compression stages, and delivers compressed air to a combustion section. The air is mixed with fuel in the combustion section and burned. Products of this combustion are passed downstream over turbine rotors.

The compressor section includes a plurality of rotors having a plurality of circumferentially spaced blades. Recently, these rotors and blades have been formed as an integral component, called an "integrally bladed rotor."

In one known integrally bladed rotor, blades extend from an outer rim. The outer rim in integrally bladed rotors is subject to a number of stresses, and in particular, hoop stresses. The hoop stresses can cause the life of the integrally bladed rotor to be reduced due to thermal fatigue.

US 2011/0182745 discloses an integrally bladed rotor in accordance with the precharacterising portion of claim 1.

### SUMMARY OF THE INVENTION

According to the present invention, there is provided an integrally bladed rotor as set forth in claim 1.

In an embodiment according to the previous embodiment, there is a plurality of discontinuities respectively formed between adjacent ones of the blades.

In another embodiment according to any of the previous embodiments, the discontinuity is formed at an angle relative to the chord line such that it relieves stress at a leading edge of one of the blades and at a trailing edge of a respective adjacent blade.

In another embodiment according to any of the previous embodiments, the channels are formed radially inward of the blades.

In another embodiment according to any of the previous embodiments, the channels include a first essentially flat portion on a radially inward side of the channel, and a second essentially flat portion on a radially outward side of the channel.

In another embodiment according to any of the previous embodiments, the leading edges and trailing edges of the blades are softened.

The invention also extends to a gas turbine engine as set forth in claim 8.

These and other features of the present invention can be best understood from the following specification and drawings, the following of which is a brief description.

### BRIEF DESCRIPTION OF THE DRAWINGS

Figure 1 schematically shows a gas turbine engine.
Figure 2 shows an integrally bladed rotor according to an embodiment of the present invention.
Figure 3 shows a perspective of the Figure 2 inventive integrally bladed rotor.
Figure 4A is a detail view of the Figure 2 integrally bladed rotor.
Figure 4B shows a further detail of Figure 4A.
Figure 5 shows a perspective of the Figure 4 integrally bladed rotor.

### DETAILED DESCRIPTION

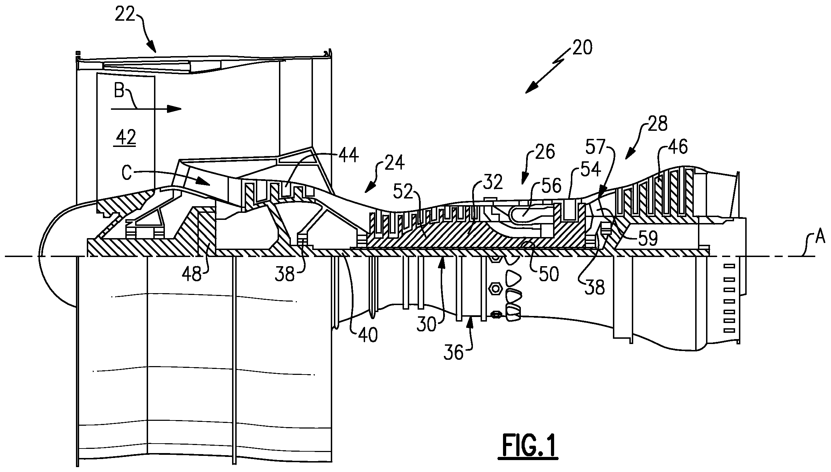

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core flowpath C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 20 in one example is a high-bypass geared aircraft engine. In a further example, the engine 20 bypass ratio is greater than about six (6), with an example embodiment being greater than ten (10), the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(T_{ambient}°R)/518.7]^{0.5}. The "Low corrected fan tip speed" as disclosed herein according to one non-limiting embodiment is less than about 1150 ft / second (350.5 m/s).

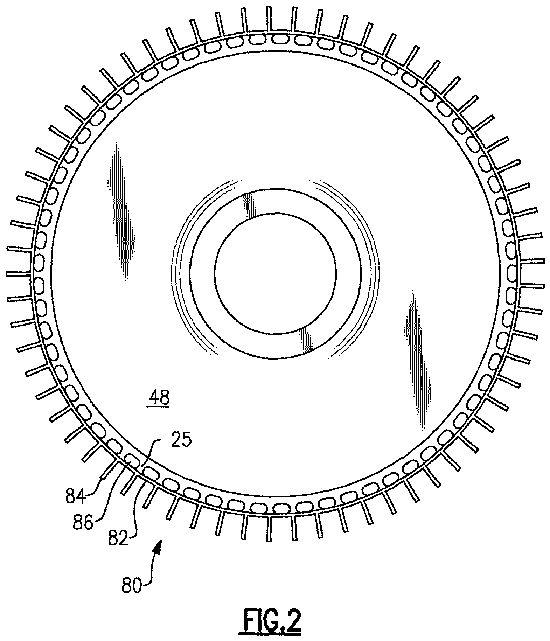

Figure 2 shows an integrally bladed rotor 80, such as may be utilized for the high stage compression section. The integrally bladed rotor 80 includes an outer rim 82, a plurality of circumferentially distributed blades 84, a central hub 48, and a plurality of channels 86. The channels 86 extend through the axial width of the rotor 80. The radial dimension of lugs 25 between channels 86 is small in order to reduce dead weight outside of the outer rim 82.

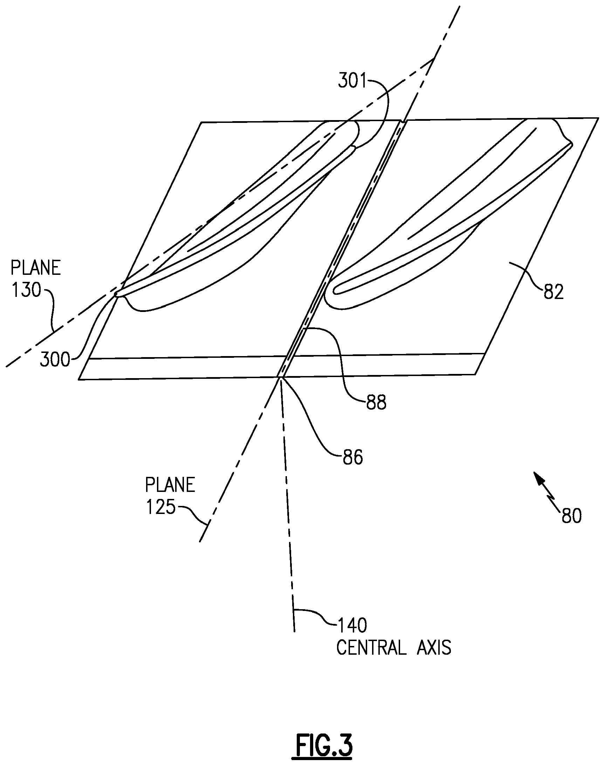

Channels 86 and discontinuities 88, 90 and 92 (see Figures 3 through 5) address the hoop stresses discussed earlier.

As is clear from Figure 3, the discontinuity 88 and channel 86 lie on plane 125. The chord line at the root of the blades 84 and associated airfoils lie on plane 130. Planes 125 and 130 are not parallel to one another or to the central axis 140 of the integrally bladed rotor 80. This arrangement serves to relieve stress on the leading 300 and trailing 301 edges of the blades 84 while still providing support for the center of the integrally bladed rotor 80. The angle of the discontinuities 88 on plane 125 relative to the chord line at the root of the blades 84 on plane 130 can allow the discontinuity to shield the leading edge 300 of one blade from stress and the trailing edge 301 of the adjacent blade from stress.

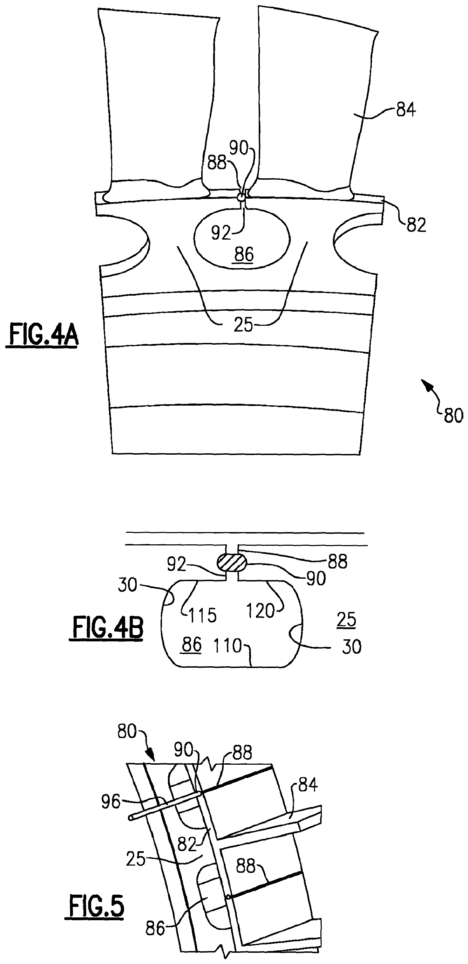

Figure 4A shows integrally bladed rotor 80. In integrally bladed rotor 80, a discontinuity 88, 90, 92 is formed through a radial extent of the outer rim 82.

As shown, a central enlarged, seal holding portion 90 is formed between two smaller slots 88 and 92. As can be appreciated from Figures 4A-B, a radially inner slot 92 extends to the channel 86. As is clear from Figures 4A-B, the slots 88 and 92 extend for a thinner circumferential extent than does a seal holding portion 90.

As is shown in Figure 3 and Figures 4A-B, the cavities 86 are formed radially inward from the blades 84. The edges of the blades are softened in order to reduce thermally driven stresses at the edges and reduce the thickness of the outer rim 82.

Figure 4B shows that the channels 86 have a modified oval shape. The channel has essentially flat portions 115 and 120 where it meets the outer rim 82 on the radially outer side. The channel 86 also has an essentially flat portion 110 on the radially inner side. Curved edges 30 of lugs 25 connect the essentially flat portions. These essentially flat portions serve to reduce the high stresses due to centrifugal force at these areas. Other modified shapes with essentially flat portions could be used as well.

As shown in Figure 5, the outer slot 88 extends across the axial width of the rotor 80. Seals 96 may be inserted in the enlarged portion 90 of the discontinuity. The seal 96 is shown as a wire seal, however, other seals, such as brush seals, W seals or feather seals, may be utilized. The seals prevent recirculation of gases from the radially outer face of the outer rim 82 into the channels 86. As is clear from Figure 5, the seal material 96 is inserted into the seal holding portion 90, and not into the slots 88 and 92. In addition, the channel 86 does not receive the seal material.

## Claims

1. An integrally bladed rotor (80) comprising:
an outer rim (82) having a plurality of blades (84) extending radially outwardly of said outer rim (82);
a plurality of channels (86) being formed radially inwardly of said outer rim (82) and extending through an axial width of the integrally bladed rotor (80); and
a plurality of discontinuities (88, 90, 92) formed at a radially outer surface of said outer rim (82), each discontinuity (88, 90, 92) lying in one plane (125) with a respective channel (86), including a first thin slot (88) at a radially outer face of said outer rim (82) with an enlarged seal holding area (90), a second thin slot (92) positioned radially inwardly of said seal holding area (90) and intersecting said channel (86), said first and second thin slots (88, 92) being thinner circumferentially than said enlarged seal holding area (90), and a seal (96) inserted into said seal holding area (90), said seal (96) not extending into said first and second thin slots (88, 92) and said seal (96) not extending into said channels (86),
**characterised in that**:
each said discontinuity (88, 90, 92) is formed non-parallel to a chord line (130) at a respective root of said blades (84);
each said discontinuity (88, 90, 92) is formed non-parallel to a central axis (140) of said integrally bladed rotor (80);
each said channel (86) is formed non-parallel to said chord line (130) at a respective root of said blades (84); and
each said channel (86) is formed non-parallel to said central axis (140) of said integrally bladed rotor (80).

2. The integrally bladed rotor as set forth in claim 1, wherein there is a plurality of discontinuities (88, 90, 92) respectively formed between adjacent ones of said blades (84).

3. The integrally bladed rotor as set forth in claim 1 or 2, wherein said or each discontinuity (88, 90, 92) is formed at an angle relative to said chord line (130) such that it relieves stress at a leading edge (300) of one of said blades (84) and at a trailing edge (301) of a respective adjacent blade (84).

4. The integrally bladed rotor as set forth in any preceding claim, wherein said channels (86) are formed radially inward of said blades (84).

5. The integrally bladed rotor as set forth in any preceding claim, wherein said channels (86) are formed radially inward of a leading edge (300) of said blades (84) and of a trailing edge (301) of said blades (84).

6. The integrally bladed rotor as set forth in any preceding claim, wherein said channels (86) include a first essentially flat portion (110) on a radially inward side of said channel (86), and a second essentially flat portion (115, 120) on a radially outward side of said channel (86).

7. The integrally bladed rotor as set forth in any preceding claim, wherein leading edges (300) and trailing edges (301) of said blades (84) are softened.

8. A gas turbine engine (20) comprising:
a compressor section (24) including at least one rotor (80) having a plurality of blades (84), said blades (84) not being parallel to a central axis of said rotor (80), with said at least one rotor (80) being an integrally bladed rotor as set forth in any preceding claim,
said compressor section (24) being for delivering compressed air downstream into a combustion section (26), said combustion section (26) being for delivering products of combustion downstream across a turbine rotor (28).

## Patentansprüche

1. Integral beschaufelter Rotor (80), umfassend:
einen Außenkranz (82), der eine Vielzahl von Schaufeln (84) aufweist, die sich von dem Außenkranz (82) radial nach außen erstrecken;
eine Vielzahl von Kanälen (86), die radial einwärts des Außenkranzes (82) ausgebildet sind und sich durch eine axiale Breite des integral beschaufelten Rotors (80) erstrecken; und
eine Vielzahl von Diskontinuitäten (88, 90, 92), die an einer radial äußeren Fläche des Außenkranzes (82) ausgebildet sind, wobei jede Diskontinuität (88, 90, 92) in einer Ebene (125) mit einem entsprechenden Kanal (86) liegt und einen ersten dünnen Schlitz (88) an einer radial äußeren Seite des Außenkranzes (82) mit einem vergrößerten Dichtungshaltebereich (90), einen zweiten dünnen Schlitz (92), der radial einwärts des Dichtungshaltebereichs (90) angeordnet ist und mit dem Kanal (86) zusammenläuft, beinhaltet,
wobei der erste und der zweite dünne Schlitz (88, 92) umfangsmäßig dünner als der vergrößerte Dichtungshaltebereich (90) sind, und eine Dichtung (96), die in den Dichtungshaltebereich (90) eingesetzt ist, beinhaltet, wobei sich die Dichtung (96) nicht in den ersten und den zweiten dünnen Schlitz (88, 92) erstreckt und sich die Dichtung (96) nicht in die Kanäle (86) erstreckt,
**dadurch gekennzeichnet, dass**:
jede solche Diskontinuität (88, 90, 92) nicht parallel zu einer Profilsehne (130) an einem entsprechenden Fuß der Schaufeln (84) ausgebildet ist;
jede solche Diskontinuität (88, 90, 92) nicht parallel zu einer Mittelachse (140) des integral beschaufelten Rotors (80) ausgebildet ist,
jeder solche Kanal (86) nicht parallel zu der Profilsehne (130) an einem entsprechenden Fuß der Schaufeln (84) ausgebildet ist;
und
jeder solche Kanal (86) nicht parallel zur Mittelachse (140) des integral beschaufelten Rotors (80) ausgebildet ist.

2. Integral beschaufelter Rotor nach Anspruch 1, wobei eine Vielzahl von Diskontinuitäten (88, 90, 92) vorliegt, die jeweils zwischen angrenzenden der Schaufeln (84) ausgebildet sind.

3. Integral beschaufelter Rotor nach Anspruch 1 oder 2, wobei die oder jede Diskontinuität (88, 90, 92) in einem solchen Winkel in Bezug auf die Profilsehne (130) ausgebildet ist, dass sie eine Spannung an einer Vorderkante (300) einer der Schaufeln (84) und an einer Hinterkante (301) einer entsprechenden angrenzenden Schaufel (84) abbaut.

4. Integral beschaufelter Rotor nach einem der vorstehenden Ansprüche, wobei die Kanäle (86) radial einwärts der Schaufeln (84) ausgebildet sind.

5. Integral beschaufelter Rotor nach einem der vorstehenden Ansprüche, wobei die Kanäle (86) radial einwärts einer Vorderkante (300) der Schaufeln (84) und einer Hinterkante (301) der Schaufeln (84) ausgebildet sind.

6. Integral beschaufelter Rotor nach einem der vorstehenden Ansprüche, wobei die Kanäle (86) einen ersten, im Wesentlichen flachen Abschnitt (110) an einer radial einwärtigen Seite des Kanals (86) und einen zweiten, im Wesentlichen flachen Abschnitt (115, 120) an einer radial auswärtigen Seite des Kanals (86) beinhalten.

7. Integral beschaufelter Rotor nach einem der vorstehenden Ansprüche, wobei Vorderkanten (300) und Hinterkanten (301) der Schaufeln (84) weichgemacht sind.

8. Gasturbinentriebwerk (20), umfassend:
einen Verdichterabschnitt (24), der mindestens einen Rotor (80) beinhaltet, der eine Vielzahl von Schaufeln (84) aufweist, wobei die Schaufeln (84) nicht parallel zu einer Mittelachse des Rotors (80) sind, wobei der mindestens eine Rotor (80) ein integral beschaufelter Rotor nach einem der vorstehenden Ansprüche ist,
wobei der Verdichterabschnitt (24) dazu dient, verdichtete Luft stromabwärts in einen Brennkammerabschnitt (26) zu liefern, wobei der Brennkammerabschnitt (26) dazu dient, Verbrennungsprodukte stromabwärts durch einen Turbinenrotor (28) zu liefern.

## Revendications

1. Rotor à pales intégrées (80) comprenant :
un rebord externe (82) ayant une pluralité de pales (84) s'étendant radialement vers l'extérieur dudit rebord externe (82) ;
une pluralité de canaux (86) étant formée radialement vers l'intérieur dudit rebord externe (82) et s'étendant à travers une largeur axiale du rotor à pales intégrées (80) ; et
une pluralité de discontinuités (88, 90, 92) formée sur une surface radialement externe dudit rebord externe (82), chaque discontinuité (88, 90, 92) se trouvant dans un plan (125) avec un canal respectif (86), comportant une première fente mince (88) sur une face radialement extérieure dudit rebord externe (82) avec une zone de maintien de joint élargie (90), une seconde fente mince (92) positionnée radialement vers l'intérieur de ladite zone de maintien de joint (90) et croisant ledit canal (86),
lesdites première et seconde fentes minces (88, 92) étant plus minces circonférentiellement que ladite zone de maintien de joint élargie (90) et un joint (96) inséré dans ladite zone de maintien de joint (90), ledit joint (96) ne s'étendant pas dans lesdites première et seconde fentes minces (88, 92) et ledit joint (96) ne s'étendant pas dans lesdits canaux (86),
**caractérisé en ce que** :
chacune desdites discontinuités (88, 90, 92) est formée de manière non parallèle à une ligne de corde (130) au niveau d'une racine respective desdites pales (84) ;
chacune desdites discontinuités (88, 90, 92) est formée de manière non parallèle à un axe central (140) dudit rotor à pales intégrées (80) ;
chacun desdits canaux (86) est formé de manière non parallèle à ladite ligne de corde (130) au niveau d'une racine respective desdites pales (84) ;
et
chacun desdits canaux (86) est formé de manière non parallèle audit axe central (140) dudit rotor à pales intégrées (80).

2. Rotor à pales intégrées selon la revendication 1, dans lequel il y a une pluralité de discontinuités (88, 90, 92) respectivement formée entre des pales adjacentes desdites pales (84).

3. Rotor à pales intégrées selon la revendication 1 ou 2, dans lequel ladite ou chaque discontinuité (88, 90, 92) est formée selon un angle par rapport à ladite ligne de corde (130) de sorte qu'elle soulage la contrainte au niveau d'un bord d'attaque (300) de l'une desdites pales (84) et au niveau d'un bord de fuite (301) d'une pale adjacente respective (84).

4. Rotor à pales intégrées selon une quelconque revendication précédente, dans lequel lesdits canaux (86) sont formés radialement vers l'intérieur desdites pales (84).

5. Rotor à pales intégrées selon une quelconque revendication précédente, dans lequel lesdits canaux (86) sont formés radialement vers l'intérieur d'un bord d'attaque (300) desdites pales (84) et d'un bord de fuite (301) desdites pales (84).

6. Rotor à pales intégrées selon une quelconque revendication précédente, dans lequel lesdits canaux (86) comportent une première partie essentiellement plate (110) sur un côté radialement intérieur dudit canal (86), et une seconde partie essentiellement plate (115, 120) sur un côté radialement extérieur dudit canal (86).

7. Rotor à pales intégrées selon une quelconque revendication précédente, dans lequel les bords d'attaque (300) et les bords de fuite (301) desdites pales (84) sont ramollis.

8. Moteur à turbine à gaz (20), comprenant :
une section de compresseur (24) comportant au moins un rotor (80) ayant une pluralité de pales (84), lesdites pales (84) n'étant pas parallèles à un axe central dudit rotor (80), ledit au moins un rotor (80) étant un rotor à pales intégrées selon une quelconque revendication précédente, ladite section de compresseur (24) étant destinée à délivrer de l'air comprimé en aval dans une section de combustion (26), ladite section de combustion (26) étant destinée à délivrer des produits de combustion en aval à travers un rotor de turbine (28) .
